# EUROPEAN PATENT APPLICATION

(11) **EP 2 233 184 A1**
(43) Date of publication of application: **29.09.2010**
(21) Application number: 10168861.2
(22) Date of filing: 16.11.2006
(51) Int. Cl.: B01D 21/00, B01D 29/44, E21B 21/06, B07B 1/34

(54) **Apparatus and Method for Separating Solids from a Solids Laden Fluid**

(30) Priority: 16.11.2005 US 280977
(62) Divisional of application: 06808759.2
(71) Applicant: National Oilwell Varco, L.P., Houston, TX 77036 (US)
(72) Inventor: Scott, Eric, TX 77302 (US); Smith, George, Edward, TX 77459-3642 (US); Burnett, George, Alexander, Aberdeen, Aberdeenshire AB10 7JR (GB); McDonough, Kevin, TX 77382 (US); Seyffert, Kenneth, Wayne, TX 77018 (GB); Mcclung III, Guy, Lamonte, TX 78382 (US)
(74) Representative: Lucas, Phillip Brian

(57) **Abstract**

An apparatus for separating solids from solids laden fluid, the apparatus comprising a base and a basket (1324) resiliently suspended on said base and a vibratory apparatus (1322) for vibrating the basket, at least one upper screen apparatus (1316) in the basket, the at least one upper screen apparatus (1316) having a fluid exit end, and at least one lower screen apparatus (1320) in the basket below the at least one upper screen apparatus (1316), fluid flowable from the at least one upper screen apparatus (1316) down onto the at least one lower screen apparatus (1320), and flow diffusion apparatus (1318) mounted below the fluid exit end of the at least one upper screen apparatus and above the at least one lower screen apparatus, so that fluid flowing down from the at least one upper screen apparatus (1316) flows onto the flow diffusion apparatus (1318) and is diffused thereby **characterised in that** the vibratory apparatus comprises at least one of: an electromagnetic vibratory apparatus; and piezoelectric vibratory apparatus for vibrating the basket (1324).

## Description

### APPARATUS AND METHOD FOR SEPARATING SOLIDS FROM A SOLIDS

### LADEN FLUID

The present invention relates to an apparatus and method for separating solids from a solids laden fluid and more particularly, but not exclusively, to an apparatus and method for separating solids from a solids laden fluid drilling mud.

Vibratory separators are used in a wide variety of industries to separate materials such as liquids from solids or solids from solids. Typically such separators have a basket or other screen holding or mounting apparatus mounted in or over a receiving receptacle or tank and vibrating apparatus for vibrating the basket and thus the screen. One or more screens are mounted in the basket. Material to be treated is introduced to the screen(s) from above either by flowing it directly onto the screen(s) or by flowing it into a container, tank, or "possum belly" from which it then flows on to the screen(s). Also in some multi-screen apparatuses material flows generally horizontally or uphill from one screen to another and, in certain systems, from an upper screen onto a lower screen which may have the same grade screen or of a finer grade.

In the drilling of a borehole in the construction of an oil or gas well, a drill bit is arranged on the end of a drill string and is rotated to bore the borehole. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as those shale shakers disclosed in US 5,265,730, WO 96/33792 and WO 98/16328.

Shale shakers generally comprise an open bottomed basket having one open discharge end and a solid walled feed end. A number of rectangular screens are arranged in the basket held in C-channel rails located on the basket walls, such as those disclosed in GB-A-2,176,424. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screens fixed thereto to shake. Solids laden mud is introduced at the feed end of the basket on to the screens. The shaking motion induces the solids to move along the screens towards the open discharge end. Drilling mud passes through the screens. The recovered drilling mud is received in the receptor for further processing and the solids pass over the discharge end of the basket into the ditch or skip.

The screens are generally of one of two types: hook-strip; and pre-tensioned.

The hook-strip type of screen comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. The supporting mesh may be provided with or replaced by a panel having apertures therein. Undesirable particles may include drilling cuttings and debris picked up in the drilling process. Smaller desirable particles may include drilling fluid additives that are required for maintaining desired drilling fluid density and viscosity.

The pre-tensioned type of screen comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen is then inserted into C-channel rails arranged in a basket of a shale shaker. An example of this type of screen is disclosed in GB-A-1,578,948.

A further example of a known rigid support is disclosed in PCT Publication No. WO 01/76719, which discloses, amongst other things, a flat panel like portion having apertures therein and wing portions which are folded to form a support structure, which may be made from a single sheet of material. This rigid support has been assigned the Trade Mark "UNIBODY" by the applicants.

The layers of mesh in the screens wear out frequently and therefore need to be easily replaceable. Shale shakers are generally in the order of 5ft wide and 10ft long. A screen of dimensions 5ft wide by 10ft long is difficult to handle, replace and transport. It is known to use two, three, four or more screens in a single shale shaker. A standard size of screen currently used is of the order of 4ft by 3ft.

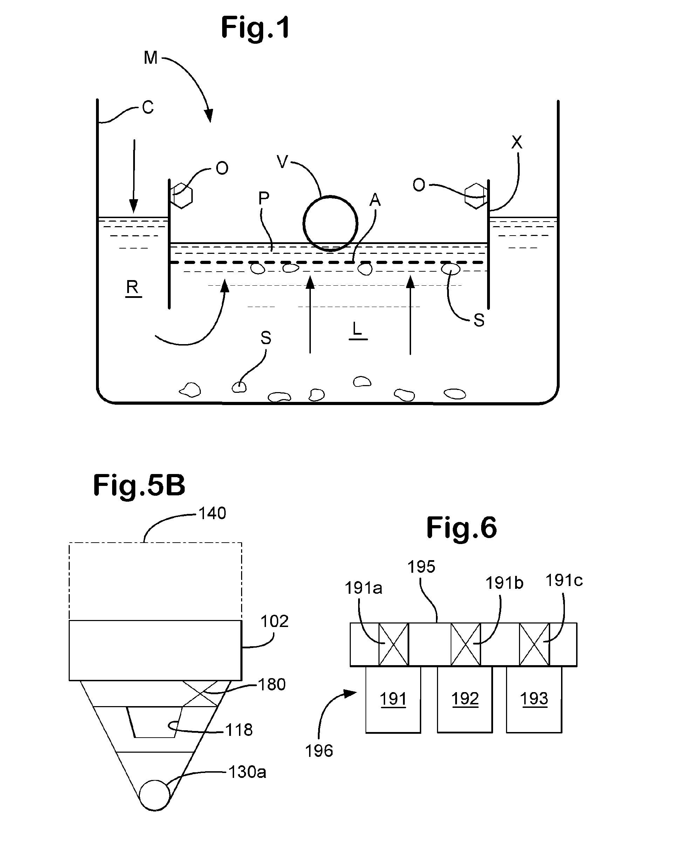

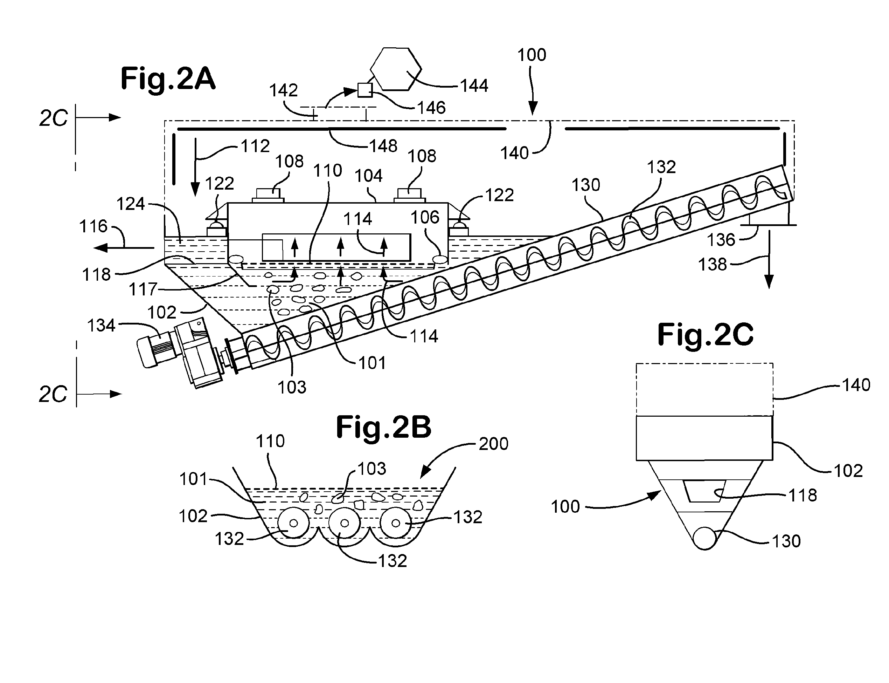

US Patent Reissue No. 25,774 discloses in Figure 1, a container having a ramped bottom and containing liquid, a middle section of a screen assembly is immersed in the liquid, the screen assembly having a discharge pipe, solids material being introduced between the container and the screen assembly, such that coarse solids fall to the bottom of the container and are raked out along the ramped bottom and screened liquid and fine particles flow through the screen assembly and out through a discharge pipe. Figure 2 shows an apparatus for wet sizing finely divided solids material, which apparatus comprises a stationary box into which feed is introduced, an impeller for agitating the feed in the stationary box, a conical portion located beneath the stationary box for collecting settling coarse fraction, screens located across top corners of the stationary box, which are vibrated with magnetic or mechanical vibrators, a fine fraction passing through the screens and collected in launders.

Examples of the general configuration of filter are disclosed in US A 4 459 207, WO A 02 43 832 and WO A 03 028 907.

The present invention provides an apparatus for separating solids from An apparatus for separating solids from a solids laden fluid, the apparatus comprising a container for containing a solids laden liquid and box having at least one opening therein and a screen assembly arranged over said opening, when in use, at least a part of the screen assembly immersed in said solids laden liquid in the container **characterised in that** said apparatus comprises at least one of: an electromagnetic vibratory apparatus; and piezoelectric vibratory apparatus for vibrating the screen assembly. The fluid is generally a liquid and may be a drilling fluid, such as an oil or water based drilling fluid.

In prior art vibratory separators, such as the SWACO BEM 600 the motion induced in the screens assembly has a conveying component of motion to convey solids up an inclined screen. This conveying component is not needed in the screen in the box of the apparatus of the present invention. Thus the energy induced in the screen is used to facilitate separation of the solids and fluid and not used to convey the solids.

Preferably, the apparatus further comprises a leaf spring for limiting the range of motion of said at least one of: an electromagnetic vibratory apparatus; and piezoelectric vibratory apparatus for vibrating the screen assembly. Advantageously, said box is arrange on or depending from resilient members. Preferably, the resilient members are springs and the box is arranged on the springs. Advantageously, the at least one of: an electromagnetic vibratory apparatus; and piezoelectric vibratory apparatus for vibrating the screen assembly is arranged to vibrate the screen assembly in substantially vertical oscillations. Preferably, the at least one of: an electromagnetic vibratory apparatus; and piezoelectric vibratory apparatus for vibrating the screen assembly is arranged to vibrate the screen assembly at an angle to the vertical. Preferably, the angle is between five and eighty-five degrees from vertical. Advantageously, the angle is between ten and forty-five degrees from vertical. Preferably, the angle is directed any from an inlet end of the apparatus.

Advantageously, the apparatus further comprises driving apparatus for driving the at least one of: an electromagnetic vibratory apparatus; and piezoelectric vibratory apparatus. Preferably, the driving apparatus comprises variable frequency drive apparatus for selectively driving the electromagnetic vibratory apparatus at a selected frequency.

Advantageously, the apparatus further comprises sensor apparatus connected to the vibratory separator for sensing a parameter indicative of operation of the vibratory separator for providing a signal corresponding to said parameter, and control apparatus for receiving signals from the sensor apparatus, for controlling the vibratory separator based on said signals. Preferably, the apparatus further comprises control apparatus for controlling said at least one of: an electromagnetic vibratory apparatus; and piezoelectric vibratory apparatus.

Preferably, the apparatus further comprises flow sensor apparatus connected to the vibratory separator for sensing the flow of material to the screen apparatus, the flow sensor apparatus controlled by and in communication with a control apparatus, and the control apparatus for adjusting shaker operation in response to signals from the flow sensor apparatus. Advantageously, the control apparatus can automatically shut down the apparatus based on a parameter of the solids laden fluid or based on the flow rate of the solids laden fluid.

Preferably, the box has a bottom face, the screen assembly arranged across an opening in the bottom of the box. Advantageously, the box has an opening in the top. Preferably, the box has at least one side, the side having an opening therein and a screen assembly covering the opening. This may be a tertiary screen assembly in addition to a screen assembly in the floor of the box. Advantageously, the box comprises tapering sides, openings in the tapering sides and screen assemblies covering the openings.

Preferably, the box has a duct extending therefrom to convey screened fluid. The duct may comprise a rigid or flexible hose, pipe or other form of conduit. Advantageously, the container has a floor which is inclined. Alternatively, the floor is substantially horizontal. Preferably, the container comprises a conveyor for conveying solids from the floor of the container. Preferably, to a discharge port. Advantageously, the conveyor comprises at least one screw. Preferably, the conveyor comprises a further screw arranged in parallel with the at least one screw. Preferably, a third screw is arranged in parallel with the other two screws to form a bed into which the solids can fall, such that the blades of the screws mesh to convey substantially all of the solids from the floor of the container to a discharge outlet. Advantageously, the conveyor has a discharge opening and a paddle on the screw (auger) apparatus for moving solids including liquid to through the discharge opening. Advantageously, the conveyor comprises a further screw arranged in series with the at least one screw. Preferably, the further screw is arranged at an angle to the at least one screw. Preferably, at right angles to each other, and advantageously, such that the at least one screw lies along horizontally and the further screw lies at right angles and upwardly from a distal end of the at least one screw.

Advantageously, the apparatus further comprises a further screening apparatus for screening wet solids discharged from the conveyor. The further solids may be wet and the conveyor may have drawn some fluid out of the solids laden fluid in the container. The further screening apparatus may further dry the wet solids and thus act as a drying screen, and/or reduce the amount of surplus fluid from the solids which are to be conveyed from the apparatus to be dumped, re-used as a by-product (such as, as an aggregate for use in construction) and/or for further processing. Preferably, the further screening apparatus comprises a screen assembly and a vibratory device. Preferably, the vibratory device is at least one of: an electromagnetic vibratory apparatus; and piezoelectric vibratory apparatus for vibrating the screen assembly. Advantageously the further screening apparatus further comprises a receptacle for collecting screened fluid. Preferably, the further screen apparatus is arranged such that screened fluid passes back into the container to be screened by the screen assembly.

Advantageously, the screen assembly is releasably removable from the box. Preferably, the box comprises an inflatable seal for releasably fixing the screen assembly in the box. Preferably, the container tapers. Advantageously, the apparatus further comprises a lid to the container. Preferably, the apparatus further comprises a vacuum system for evacuating the container of fumes. Advantageously, the apparatus further comprises a filtration apparatus for filtering the fumes from the container. Preferably using an HVAC system.

Preferably, at least part of the container is disposed beneath the screen assembly. Advantageously, the apparatus further comprises a solids laden fluid input for introducing the material into the container and a deflector for directing material away from the screen assembly. Preferably, the apparatus further comprises a valve for controlling flow of solids laden fluid into the container. Advantageously, the box is arranged on resilient members to the container.

Preferably, the at least one of: an electromagnetic vibratory apparatus; and piezoelectric vibratory apparatus for vibrating the screen assembly each comprises at least two parts, one part attached to the box and another part to the container. Advantageously, there are at least two electromagnetic or piezoelectric vibratory apparatus arranged on the apparatus for vibrating the screen assembly, preferably one each side of the box acting between the container and the box to vibrate the box containing the screen assembly. Alternatively, the at least one of: an electromagnetic vibratory apparatus; and piezoelectric vibratory apparatus for vibrating the screen assembly each comprises at least two parts, one part attached to the screen assembly and another part to the box. Preferably, the one part comprises an electromagnet and the another part comprises an electromagnet.

The present invention also provides a method for separating solids from a solids laden fluid, the method comprising the steps of introducing fluid into a container, allowing fluid to flow up through a screen assembly arranged in a box in the container, the screen assembly vibrated with at least one of: an electromagnetic vibratory apparatus; and piezoelectric vibratory apparatus for vibrating the screen assembly.

The present invention also provides an apparatus for separating solids from solids laden fluid, the apparatus comprising a base and a basket resiliently suspended on said base and a vibratory apparatus for vibrating the basket, at least one upper screen apparatus in the basket, the at least one upper screen apparatus having a fluid exit end, and at least one lower screen apparatus in the basket below the at least one upper screen apparatus, fluid flowable from the at least one upper screen apparatus down onto the at least one lower screen apparatus, and flow diffusion apparatus mounted below the fluid exit end of the at least one upper screen apparatus and above the at least one lower screen apparatus, so that fluid flowing down from the at least one upper screen apparatus flows onto the flow diffusion apparatus and is diffused thereby **characterised in that** the vibratory apparatus comprises at least one of: an electromagnetic vibratory apparatus; and piezoelectric vibratory apparatus for vibrating the basket.

In certain aspects, the present invention discloses, a method of separating solids from solids laden fluid, comprising passing the fluid through a screen which lies in a plane which is not vertical so that one face of the screen is directed generally downwardly and the opposite face is directed generally upwardly, characterized by passing the fluid through the screen from the side of the screen having the generally downwardly directed face through to the side having the generally upwardly directed face, the improvement including vibrating the screen with non-motorized vibrator apparatus.

In certain aspects the present invention discloses an apparatus for removing debris from drilling fluid, comprising a screen which lies in a plane which is not vertical so that one face of the screen is directed generally downwardly and the opposite face is directed generally upwardly, and means for introducing the fluid to the screen such that the fluid passes through the screen from the side of the screen having the generally downwardly directed face through to the side having the generally upwardly directed face, the improvement including vibration apparatus for vibrating the screen, the vibration apparatus comprising non-motorized vibrator apparatus.

The flow of material to be treated by these screens is either onto the screens from above ("downflow") or up to the screens from below ("upflow").

For a better understanding of the present invention, reference will now be made, by way of example, to the accompanying drawings, in which:
Figure 1 is schematic side view in cross-section of an apparatus in accordance with the present invention in use;
Figure 2A is a schematic side view in cross-section of an apparatus in accordance with the present invention;
Figure 2B is a cross-section view of part of an apparatus in accordance with the present invention;
Figure 2C an end view of the apparatus shown in Figure 2A;
Figure 3 is a schematic side view in cross-section of an apparatus in accordance with the present invention;
Figure 4A is a schematic side view in cross-section of an apparatus in accordance with the present invention;
Figure 4B is an end view of the apparatus shown in Figure 4A;
Figure 4C is a cross-section view of the apparatus shown in Figure 4A;
Figure 5A is a schematic side cross-section view of an apparatus in accordance with the present invention;
Figure 5B is an end view of the apparatus shown in Figure 5A;
Figure 6 is a top schematic view of an apparatus in accordance with the present invention;
Figure 7A is a perspective view of an apparatus in accordance with the present invention.
Figure 7B is an end view of the apparatus of Figure 7A.
Figure 7C is a side view of the apparatus of Figure 7A.
Figure 7D is a top view of the apparatus of Figure 7A.
Figure 7E is a side view of part of the apparatus of Figure 7A.
Figure 8A is a side view in cross-section of an apparatus in accordance with the present invention. Figure 8B is a side view in cross-section of an apparatus in accordance with the present invention.
Figure 8C is a side view in cross-section of an apparatus in accordance with the present invention.

Figure 1 shows an apparatus M in accordance with the present invention which has a container C into which material R is introduced, indicated by the downward pointing arrow. The material R may include a liquid L and solids S. The material R flows to a screen apparatus A which is mounted in a basket X. The basket X may be enclosed to form a box (not shown) or have an open upper face as shown. Fraction P of the material, for example liquid or liquid plus some solids, flows up through the screen apparatus A. The fraction P is removed from the apparatus through a pipe under gravity or by removal apparatus V (for example vacuum or pump apparatus). Part of the material, for example solids S and agglomerations or masses of solids, either settles down in the container C without contacting the screen apparatus A or, upon being prevented from further upward flow by the screen apparatus A and/or by material already adjacent the screen apparatus A, falls downwardly in the container C.

Electromagnetic vibrator apparatus O vibrates the basket X and, thus, the screen apparatus A. It is within the scope of the present invention to use one, two, three, four or more electromagnetic vibrator apparatuses (and to do so for any vibrator or vibration apparatus of any embodiment disclosed herein). It is within the scope of the present invention for the screen apparatus A (and the apparatus 110 described below) to be any suitable known screen or screen assembly used for vibratory separators or shale shakers. In one particular aspect the material R is drilling material with drilling fluid and drilled solids. Instead of, or in addition to, one or more electromagnetic vibrator apparatuses, in accordance with the present invention, (as is true for any embodiment in accordance with the present invention) one, two, three, four or more piezoelectric vibration apparatuses are used. Also, in accordance with the present invention any vibrator or vibration apparatus of any embodiment in accordance with the present invention may be connected directly to the screen apparatus instead of to the basket X. Appropriate mounts and/or isolators and/or shock absorbers O may be used to mount the vibrator or vibration apparatuses to a basket or directly to a screen apparatus.

Figures 2A to 2C illustrate an apparatus 100 in accordance with the present invention which has a housing 102 for containing material 101 to be treated. A screen apparatus 110 is removably secured to a box 104 which is mounted to the housing 102. Any known structure and/or apparatus may be used to removably secure the screen apparatus 110 to the box 104 and, as shown, in one aspect, a known inflatable seal apparatus 106 is used for this purpose. An example of an inflatable seal apparatus is disclosed in GB-A-2,176,424, which seals can be adapted to be used fixing a screen apparatus 110 in the bottom opening of the box 104.

Vibratory apparatus 108 (electromagnetic vibrator apparatus or piezoelectric vibrator apparatus) connected to the box 104 vibrates the box 104 and thus the screen apparatus 110. Any suitable known vibratory apparatus may be used for the vibratory apparatus 108. Any suitable known screen or screens, screen assembly or screen assemblies may be used for the screen apparatus 110. The box 104 is mounted on anti-vibration mounts 122. Optionally, the apparatus 108 is connected directly to the screen apparatus 110.

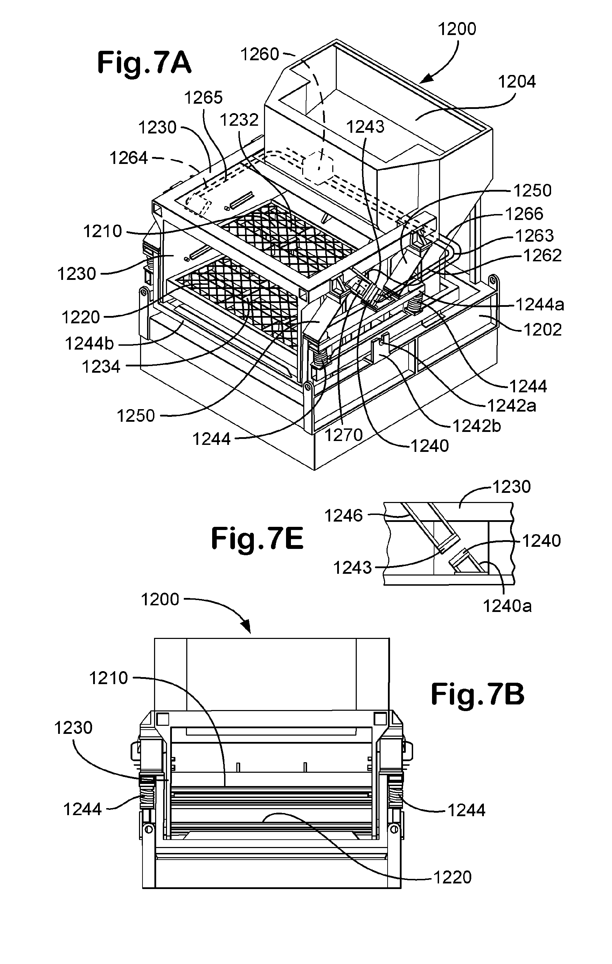

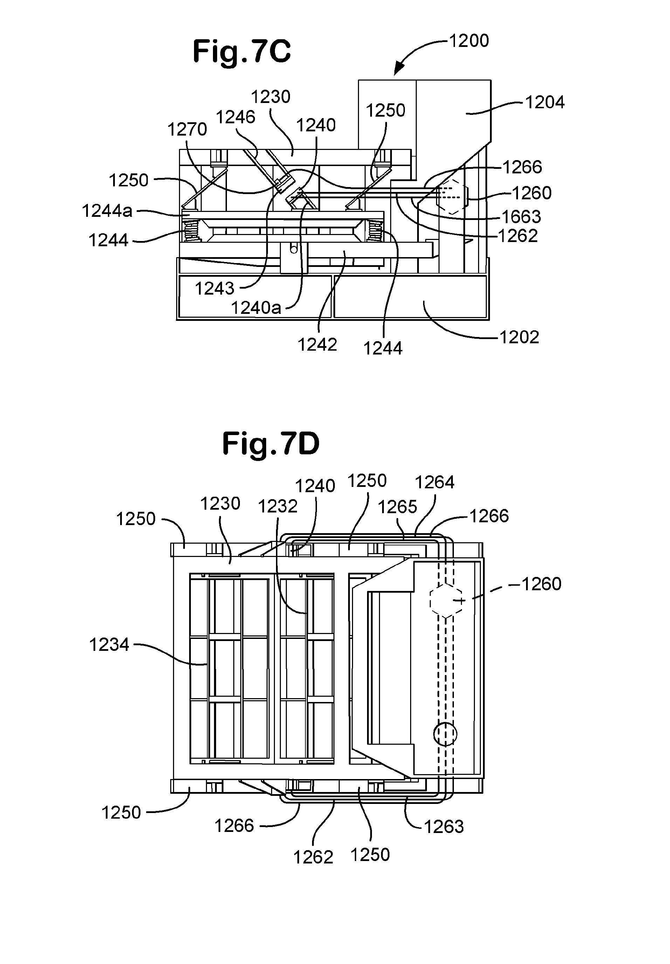

An arrow 112 indicates the introduction of the material 101 (including, but not limited to, drilling material including drilling fluid or mud, and drilled solids and debris) into the housing 102. Arrows 114 indicate the flow of the material 101 up to and, at least part thereof, through the screen apparatus 110. An arrow 116 indicates the discharge of recovered material, for example fluid and/or fluid plus solids, 124 through a discharge duct 118 from the box 104 (shown schematically in Figure 7C). In one aspect the duct 118 is flexible or has a flexible portion so that the duct 118 and the box 104 can be lowered in the housing 102, for example for access, maintenance, or cleaning. A deflector 117 directs incoming fluid flow. Heavier and/or agglomerated solids, directed by the deflector 117, will flow downwardly to the conveyor system 130 and will not impact the screen apparatus 110.

Solids 103 that do not pass through the screen apparatus 110 fall within the housing 102 and enter a conveyor 130. An auger apparatus 132 rotated by a motor 134 augers the solids 103 up to a discharge opening 136. An arrow 138 indicates the flow of the material with discharged solids from the apparatus 100 to storage, to disposal, or to additional processing. In one aspect the auger, as shown, is inclined upwardly.

In accordance with the present invention, one, two, three, four, or more auger apparatuses may be used with a system in accordance with the present invention; for example the apparatus 200, on which similar parts to those identified in Figure 2A are used has three auger apparatuses 132. Optionally, the apparatus 100 is enclosed with an enclosure 140. In one aspect air, fumes, gases, and/or material entrained in air above the box 104 are evacuated through an access opening 142. Optionally this is accomplished by an HVAC system 144 and/or a filtration system 146 with appropriate pumping apparatus and/or vacuum apparatus. Optionally the enclosure 140 itself or the enclosure 140 with sound insulation material 148 reduces noise from the apparatus 100.

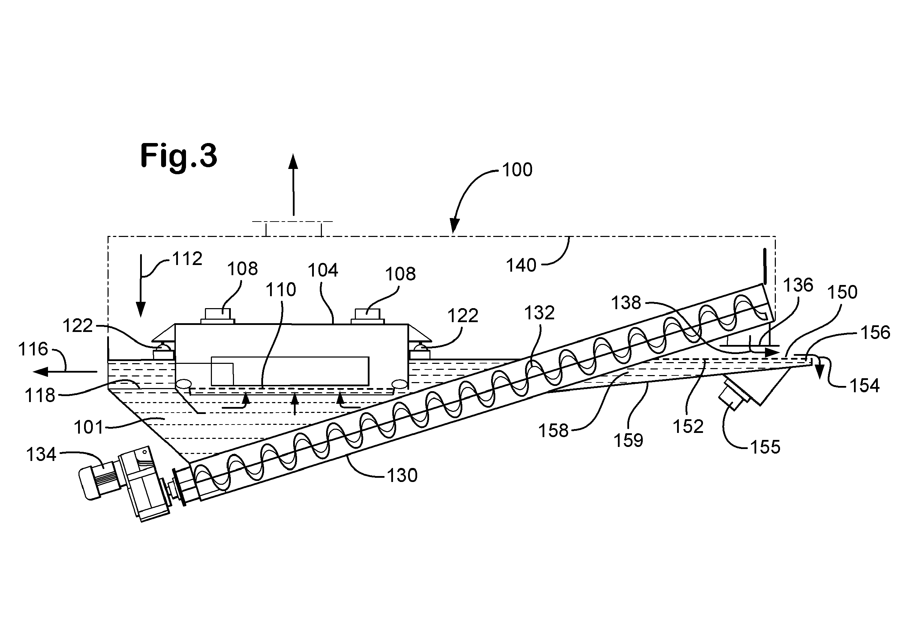

Figure 3 illustrates one embodiment of the invention, which is generally similar to the apparatus 100 shown in Figure 2A and 2C (and like numerals indicate like parts) which includes a further screen apparatus 150 which receives the discharged material 138. The further screen apparatus 150 comprises a screen 152 arranged substantially horizontally at or slightly above the surface of the bath of material 101 to be separated. The further screen apparatus 150 is located underneath a discharge opening 136 of the screw conveyor apparatus 130. Solids and some fluid will be discharged through discharge opening 136 from the auger(s) 132 on to the top surface of the horizontal screen 152. It is within the scope of the present invention for the screen apparatus 150 to be inclined downwardly towards a discharge end and for material to move off of it under the influence of gravity or, as shown, in Figure 3 the screen apparatus 150 includes vibratory apparatus 155 (like, for example the vibratory apparatus 108) which vibrates the screen or screens 152 (for example like the screen apparatus 110). Separated solids 154 flow off a discharge end 156 of the screen(s) 152 and reclaimed fluid 158 flows to a receptacle or container 159 which may form part of the container 102, such that the fluid is then screened through screen apparatus 110 and onward through discharge duct 118. Alternatively, the separated fluid is retained in a separate container or pan beneath the screen 152 and which flows out through a separate duct to be recirculated in a well or further processed.

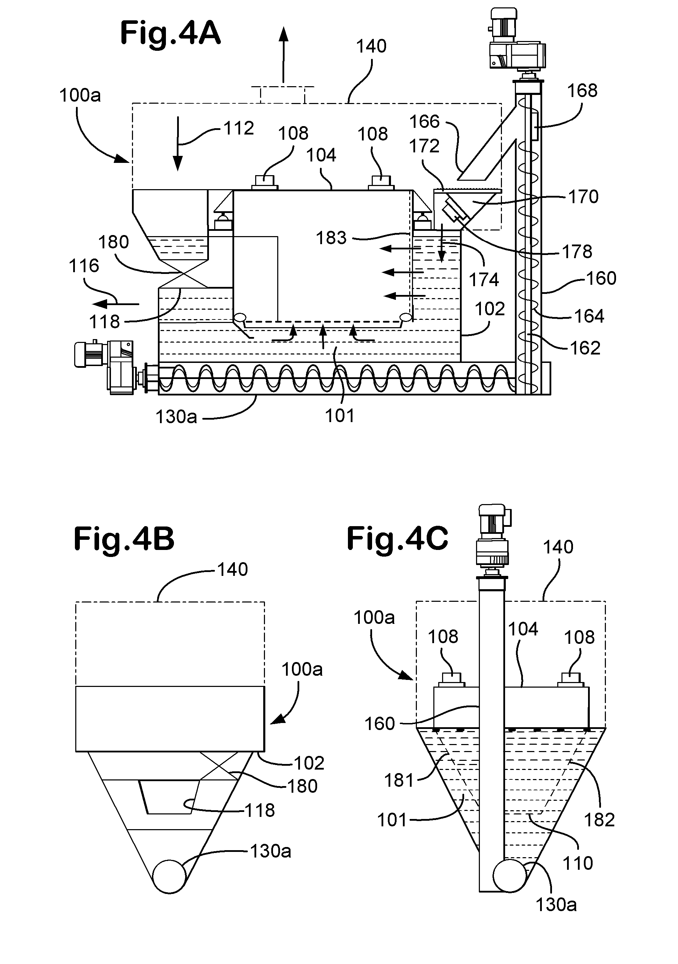

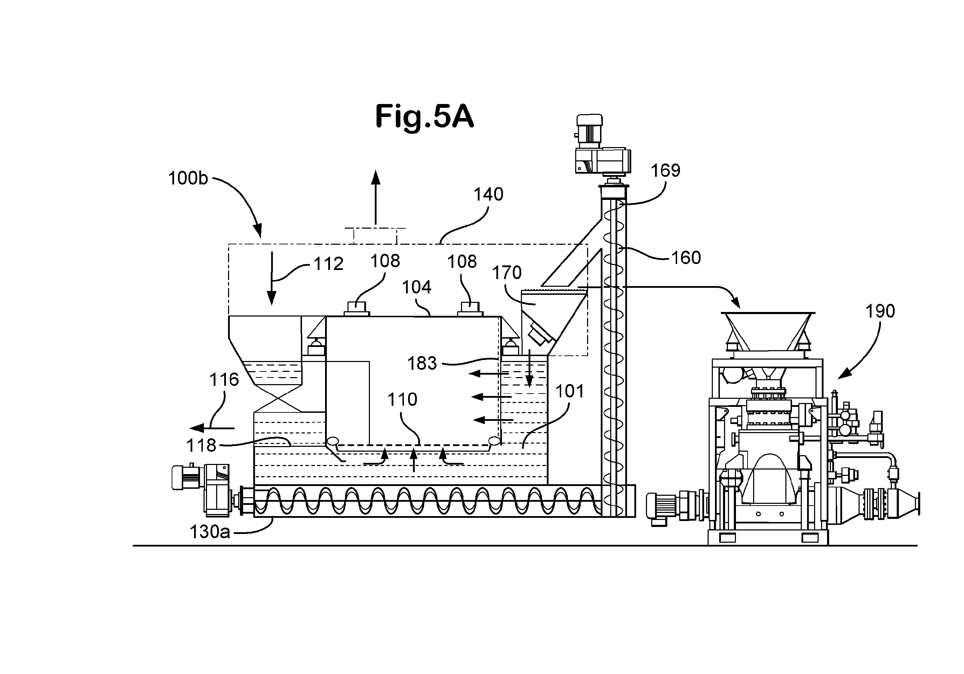

Figures 4A to 4C illustrate an apparatus in accordance with the present invention similar parts to the parts of the apparatus 100 shown in Figure 2A and 2C are designated with like reference numbers. The apparatus includes at least one additional conveyor 160 (like the conveyor system 130) which is oriented in a generally vertical orientation. A conveyor 130a, like the conveyor 130, may be oriented as shown in Figure 2A or, as shown in Figure 4A, may be oriented generally horizontally. The conveyor system 130a moves material with separated solids to the conveyor 160 which, in turn, moves the material up to an exit duct 166. An optional paddle 168, secured to an auger apparatus 162 of the system 160 so that it is adjacent the duct 166, facilitates the movement of material into the exit duct 166. In one aspect the paddle 168 is a straight blade section on the auger apparatus 162 (as opposed to screw flights on the rest of the auger apparatus 162). Optionally, in one aspect a reversed flight 169 is used at the top of the auger apparatus (see, for example Figure 5A) which moves material downwardly to the duct 166. Such a flight 169 can be used with the paddle 168.

Material with separated solids may, in accordance with the present invention, flow to storage or to further processing apparatus or, as shown in Figure 4A, may be introduced to a vibratory separator apparatus 170 with screening apparatus 172 (like the screening apparatus 110) vibrated by vibratory apparatus 178 (like the vibratory apparatus 108). It is within the scope of the present invention for the material with solids separated by the vibratory separator apparatus to flow to disposal, to storage, or to further processing. Reclaimed fluid from the vibratory separator apparatus 170 can be directed to storage or to a container; or, as shown in Figure 4A by an arrow 174, it can flow back into the housing 102.

Optionally, a valve 180 selectively controls the flow of fluid into the housing 102. Optionally, in addition to (or instead of) the screen apparatus 110, one or more walls of the box 104 may have a screen mounted therein or thereon, or a screen or screens can be secured to the box 104. For example, as shown in Figure 4C two inclined screens 181, 182 (like the screen apparatus 110) are secured to the box 104 and material 101 is flowable through the screens 181, 182 and through the screen apparatus 110. Additionally, and/or optionally, a further screen 183, oriented generally vertically, may be secured to a vertical face 184 of the box 104.

In certain aspects, the use of an additional conveyor, such as the conveyor 160, makes it possible for the material depth within the housing 102 to be increased as compared to an apparatus with an inclined conveyor. This can permit a screen apparatus to be set relatively deeper in a box which can result in side screens being relatively taller so that more screening area is provided in a specified footprint area. In certain aspects in accordance with the present invention, to empty a system as in Figure 4A, a height adjustment is made for both the box 104 and the duct 118.

Figure 5A illustrates a apparatus 100b like the apparatus 100a of Figure 4A (like numerals indicate like parts) which includes a solids conveying system 190, such as the solids conveying system disclosed in PCT Publication No. WO 2005/124096. Solids separated by the vibratory separator apparatus 170 are introduced to the solids conveying system 190. In one particular aspect the solids introduced to the system 190 are drilled cuttings separated from a material that includes drilling fluid and drilled solids ("drilled cuttings") and the system 190 is a drilled cuttings conveyance system. It is within the scope of the present invention to employ any suitable known cuttings conveyance system for the system 190.

As shown in Figure 6 a system 196 in accordance with the present invention may have a plurality of vibratory separators 191, 192, 193 (as any in accordance with the present invention; in one aspect, each vibratory separator is a shale shaker processing drilling material). Material to be processed flows in a feed conduit or "gutter" 195 and each separator or shaker 191 to 193 has a flow valve 190a, 190b, 190c, respectively which selectively controls flow to each separator or shaker 191 to 193. Thus one, two or three separators or shakers 191 to 193 can be operational as desired. It is within the scope of the present invention to provide one, two, three, four, five, six or more separators or shakers in a system 196 in accordance with the present invention.

The screens A, 110 in the boxes X, 104 are vibrated by electromagnetic vibrators or piezoelectric vibrators. Exemplary electromagnetic vibrator apparatuses are disclosed in U.S. Patents 4,836,385; 6,543,620; 6,938,778; and 6,953,122; and exemplary piezoelectric vibrator apparatuses are disclosed in U.S. Patents 6,543,620; 6,938,778; and 6,953,122 - all of said patents incorporated fully herein.

Figures 7A to 7E show an apparatus more readily referred to as a shale shaker 1200 in accordance with the present invention which has a base 1202 with a fluid input tank 1204 from which drilling fluid with solids therein flows on to the top surface of a screen assembly 1210. Drilling fluid flows through the screen assembly 1210 and solids (including undesirable solids such as drilled cuttings) moves along the screen assembly 1210, which is inclined "uphill". The solids move off the end of the screen assembly 1210 and down onto a lower screen assembly 1220 which is also inclined "uphill". The angle of incline is preferably set at seven degrees from horizontal, but may be five to ten degrees or three to twelve degrees or two to twenty degrees. Drilling fluid passing through the screen assembly 1220 flows to a pit, tank or collection receptacle 1208 and material (including undesirable solids such as drilled cuttings) moves off the end of the screen assembly 1220 and falls to a container or further processing apparatus.

The screen assemblies 1210 and 1220 are releasably mounted to decks 1232, 1234 fixed in a basket 1230. Two electromagnet apparatuses 1240 are mounted on a support 1244a fixed to a cradle 1244b. The support 1244a is secured to the base 1202 with springs 1244. The springs 1244 are preferably secured to a support beam 1242 which is pivotable about an axis 1242a arranged in a recess in a plate 1242b fixed to the base 1202, so that the angle of the basket 1230 can be adjusted. The angle of the basket can be adjusted automatically with a feed back control system dependent on pool depth or beech length as disclosed in PCT publication no. WO 2005/105327. Plates 1243 secured to a mounting bracket 1246 (which, in one aspect, is made of composite material) is secured to the basket 1230 and are attracted by the electromagnetic apparatuses 1240. Each electromagnetic apparatus 1240 has a mounting bracket 1240a (which, in one aspect, is made of composite material) fixed to support 1244a. By pulsing power to the electromagnetic apparatuses 1240 (e.g. with alternating current), the plates are moved quickly toward and away from the electromagnetic apparatuses 1240, thus vibrating the basket 1230 and the screen assemblies 1210 and 1220. Optionally, the cradle 244b and the pivotable beam 242 are omitted.

An alternating current applied to the electromagnet causes an attractive electromagnetic force between the electromagnet and the plate. The frequency of input current to the electromagnet is same as the output vibration frequency of the basket. The vibration amplitude of the basket is a function of the input current and frequency to the electromagnet, weight of the basket and processed material, and the stiffness of the springs or resonators supporting the basket. Generally, as the input current to the electromagnet is increased, the vibration amplitude increases. As the input current to the electromagnet is decreased, the vibration amplitude decreases. In one aspect, the apparatuses 1240 vibrate the basket 1230 at its natural resonant frequency.

Leaf springs or resonators 1250 are interconnected between the basket 1230 and the support 1242 to allow the basket 1230 limited freedom of movement with respect to the electromagnetic apparatuses 1240.

A controller 1260 (shown schematically, which may be any suitable known programmable logic controller ("PLC"), variable frequency drive ("VFD") (one for each apparatus 1240), or controller for controlling electromagnetic apparatuses and/or any controller or control system disclosed herein with suitable apparatus, devices, and programming for controlling the electromagnetic apparatuses) via lines 1262 - 1265 (shown schematically) controls the electromagnetic apparatuses 1240. In certain aspects the controller 1260 controls the frequency and amplitude of vibrations of the basket 1230 by controlling the electromagnetic apparatuses 1240. One or more accelerometers 1270 measure acceleration of the basket 1230 and provides signals via a cable 1266 (e.g. a multi-wire cable) to the controller 1260. In one aspect, the accelerometer measures acceleration and sends an output signal to a control system or PLC. The control system or PLC includes parameters to control the electromagnets. An acceleration setpoint is chosen and programmed into the PLC. If the accelerometer measures an acceleration below the setpoint, then the control system or PLC increases the input current to the electromagnets. If the accelerometer measures an acceleration above the setpoint, then the control system or PLC decreases the input current to the electromagnets. If the accelerometer measures an acceleration at the setpoint, then the control system or PLC maintains the previous input current to the electromagnets. Thus, the shaker can operate at constant acceleration under load (and under changing load) because of this closed-loop acceleration control, and, in one aspect, at a constant natural resonant frequency under load. Such a controller may be used to control any vibratory apparatus of any embodiment disclosed herein.

The system, in certain aspects, operates at the natural frequency of the basket with load springs or resonators. Operating the shaker at the system resonance greatly reduces the input energy required to drive the system. Certain traditional shakers can operate at many times the natural frequency and require excessive power to operate. Operating a shaker in accordance with the present invention at its natural frequency reduces energy requirements and permits the use of lighter baskets.

Certain traditional shakers operate at a fixed motor speed and with a fixed rotating mass. This produces a fixed force at a fixed frequency. A basket without the additional mass of drilling mud operates at a nominal acceleration. As drilling mud is added to the basket, the system mass is increased, but the driving force remains fixed. This results in a significantly decreased acceleration. Acceleration is a primary factor determining shaker performance and fluid handling capacity. In order for a traditional shaker to be able to operate over a wide range of loads, some baskets have been designed to be exceptionally heavy compared to the load they process. This helps reduce the effect of decreasing acceleration with increasing load. However, heavy baskets operating above the system natural frequency require significant input power. Even with heavy baskets, some traditional shakers can lose up to 25% of their nominal acceleration with the addition of weighted drilling mud.

A shaker in accordance with the present invention, in certain aspects, changes the input frequency to the electromagnets to match the natural frequency of the system. Thus, as more mass is added to the system with drilling mud, the PLC automatically determines the new lower natural frequency. In addition, in some aspects, the feedback from the accelerometer is used by the PLC to change the current to the electromagnet and maintain a constant acceleration amplitude. The electromagnets of the shaker can be driven with a typical input current function and a superimposed high-frequency signal to partially de-plug the screens. This can also be accomplished by out-of-phase driving with the typical input current functions. Since adding weight to the screens changes the system natural frequency, this frequency can be measured to assist in determining the weight of the cuttings discharged by the shaker. A signal representative of the natural frequency of the system is sent to the PLC and/or computer that calculates the total amount of solids discharged.

In one embodiment, the controller (PLC or computer) includes two control loops. One control loop controls the acceleration by varying the voltage supplied to the magnets and measuring the signal from the accelerometer, indicative of the acceleration. The other control loop controls the frequency to maintain the lowest ratio of input power to output acceleration. To find the natural frequency of the system, the controller sweeps the magnet frequency over a given range that the natural frequency is expected to lie within. The frequency that yields the greatest acceleration for the same input is the natural frequency. The frequency control loop tried to maintain the frequency at the natural frequency. Once the natural frequency is found, if the ratio of input power to output acceleration decreases, then the controller adjusts down the frequency until the frequency is found that minimizes the required input power to maintain the same acceleration. Any controller and/or control loop disclosed herein in accordance with the present invention, and/ or driving apparatus, can be used with any separator or shaker disclosed herein in accordance with the present invention.

It is within the scope of the present invention to provide a vibratory separator or shale shaker with one, two, or more electromagnetic vibrators, the vibratory separator or shaker having one, two or more generally horizontal screens and/or one, two, three or more screens inclined uphill.

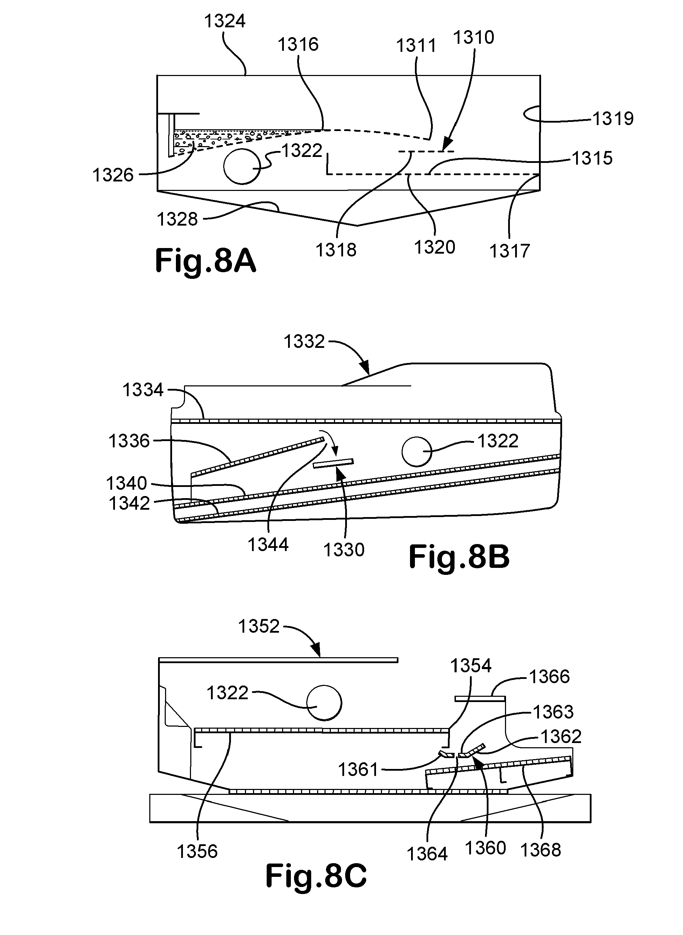

Figure 8A shows schematically a shale shaker 1312 in accordance with the present invention with a flow diffusion apparatus 1310. The flow diffusion apparatus in Figure 8A and those in Figure 8B and Figure 8C may be any flow diffusion apparatus disclosed in U.S. Patent 6,868,972. Fluid flowing from an exit end 1311 of an upper screen 1316 hits the flow diffusion apparatus 1310. Without the flow diffusion apparatus 1310 in place, the fluid flowing from above would impact an area 1315 on a lower screen 1320. A basket 1324 supports the screens. The flow diffusion apparatus 1310 (as may be the case for any such apparatus) is secured to the basket 1324. The flow diffusion apparatus 1310 may be connected to the upper screen, the lower screen, or both in addition to, or instead of, securement to the basket 1324. The flow diffusion apparatus 1310 has one or a series of holes 1318 therethrough which permit fluid to flow therethrough down onto the lower screen 1320.

A vibratory apparatus 1322 (shown schematically; any electromagnetic vibratory apparatus disclosed herein) vibrates the basket 1324 in which the upper screen 1316 and lower screen 1320 are mounted. Fluid to be treated is introduced into a pool end 1326 of the shale shaker 1312. Fluid flows from both screens down into a collection receptacle 1328. Separated material exits from an exit end 1317 of the lower screen 1320.

Figure 8B shows a shale shaker 1332 in accordance with the present invention with a flow diffusion apparatus 1330. Fluid introduced at a fluid introduction end 1334 of the shale shaker 1332 flows to an upper screen 1336. The major portion of this fluid flows from the upper screen 1336 to an intermediate screen 1340 and through the intermediate screen 1340 to a lower screen 1342. Fluid flowing from an end 1344 of the intermediate screen 1340 (see arrow, Figure 8B above the apparatus 1330) flows down onto the flow diffusion apparatus 1330 which, in the embodiment shown, is a solid plate; but which, in accordance with the present invention, may have one or more holes, etc. for fluid flow therethrough. Vibrator apparatus 1322 (like that described above; shown schematically) vibrates a screen mounting basket 1346 in which the screens are located.

Figure 8C shows a shale shaker 1352 in accordance with the present invention which has a flow diffusion apparatus 1350 (like those described above) which is positioned below a fluid exit end 1354 of an upper screen 1356 (which, as may be any screen etc. of any embodiment herein, may be any suitable known screen(s), screen apparatus(es), or screen assembly or assemblies). Viewed on end the flow diffusion apparatus in one aspect has two sides 1361, 1362 spaced apart by a flat part 1363 in a truncated "V" shape, but it is within the scope of this invention for any flow diffusion apparatus herein to be "V" shaped, "U" shaped, truncated "V" or "U" shaped, or flat. In one aspect side 1361 and/or side 1362 is deleted.

Fluid flowing from the fluid exit end 1354 of the upper screen 1356 falls into the flow diffusion apparatus 1350 and moves from there down onto a lower screen 1368 (which, as may be any screen etc. of any embodiment herein, may be any suitable known screen(s), screen apparatus(es), or screen assembly or assemblies). In one aspect, fluid flow holes (of different diameters) are present in the flat part 1363 of the flow diffusion apparatus 1350. In one aspect, all of the holes are of the same diameter. In one aspect the flow diffusion apparatus 1350 extends under and corresponds in length to slightly less than the width of the upper screen 1356 above the flow diffusion apparatus 1350. Vibrator apparatus 1322 (shown schematically; like the apparatus 1322 described above) vibrates a screen mounting basket 1366 in which are secured the screens 1356 and 1368.

## Claims

1. An apparatus for separating solids from solids laden fluid, the apparatus comprising a base and a basket (1324) resiliently suspended on said base and a vibratory apparatus (1322) for vibrating the basket, at least one upper screen apparatus (1316) in the basket, the at least one upper screen apparatus (1316) having a fluid exit end, and at least one lower screen apparatus (1320) in the basket below the at least one upper screen apparatus (1316), fluid flowable from the at least one upper screen apparatus (1316) down onto the at least one lower screen apparatus (1320), and flow diffusion apparatus (1318) mounted below the fluid exit end of the at least one upper screen apparatus and above the at least one lower screen apparatus, so that fluid flowing down from the at least one upper screen apparatus (1316) flows onto the flow diffusion apparatus (1318) and is diffused thereby **characterised in that** the vibratory apparatus comprises at least one of: an electromagnetic vibratory apparatus; and piezoelectric vibratory apparatus for vibrating the basket (1324).

2. An apparatus as claimed in Claim 1, wherein the basket (1324) is arranged in a cradle (1244b) resiliently suspended on coiled springs (1244).

3. An apparatus as claimed in Claim 2, wherein said cradle (1244b) comprises a beam (1244a) which sits on said coiled springs (1244).

4. An apparatus further comprising a leaf spring (1250) for limiting the range of motion of said at least one of:
an electromagnetic vibratory apparatus; and piezoelectric vibratory apparatus for vibrating the screen assembly.

5. An apparatus as claimed in Claim 3 and 4, wherein said leaf spring (1250) is arranged between said beam (1244a) and said basket (1324).

6. An apparatus as claimed in any one of Claims 3 to 5, wherein the at least one electromagnetic vibratory apparatus comprises at least two parts (1240,1243), one part attached to the basket and another part to the beam (1244a).

7. An apparatus as claimed in any one of Claims 1 to 6, wherein said at least one of: an electromagnetic vibratory apparatus; and piezoelectric vibratory apparatus for vibrating the screen assembly is arranged to vibrate the screen assembly in substantially vertical oscillations.

8. An apparatus as claimed in any one of Claims 1 to 7, wherein said at least one of: an electromagnetic vibratory apparatus; and piezoelectric vibratory apparatus for vibrating the screen assembly is arranged to vibrate the screen assembly at an angle to the vertical.

9. An apparatus as claimed in any one of Claims 1 to 8, further comprising driving apparatus for driving the at least one of: an electromagnetic vibratory apparatus; and piezoelectric vibratory apparatus.

10. An apparatus as claimed in Claim 9, wherein the driving apparatus comprises variable frequency drive apparatus for selectively driving the electromagnetic vibratory apparatus at a selected frequency.

11. An apparatus as claimed in any one of Claims 1 to 10, further comprising sensor apparatus connected to the vibratory separator for sensing a parameter indicative of operation of the vibratory separator for providing a signal corresponding to said parameter, and control apparatus for receiving signals from the sensor apparatus, for controlling the vibratory separator based on said signals.

12. An apparatus as claimed in any one of Claims 1 to 11, further comprising control apparatus for controlling said at least one of: an electromagnetic vibratory apparatus; and piezoelectric vibratory apparatus.

13. An apparatus as claimed in any one of Claims 1 to 13, wherein at least a portion of the screen apparatus is inclined uphill.

14. A method for separating solids from a solids laden fluid, the method comprising the steps of introducing fluid on to the screen assembly of the basket of the apparatus as claimed in any preceding claim, vibrating said basket with at least one of: an electromagnetic vibratory apparatus; and piezoelectric vibratory apparatus and allowing fluid to flow down through the screen assembly.
